(19) Europäisches Patentamt
European Patent Office
Office européen des brevets

(11) **EP 4 468 243 A1**

(12) **EUROPEAN PATENT APPLICATION**

(43) Date of publication:
**27.11.2024 Bulletin 2024/48**

(21) Application number: **24176877.9**

(22) Date of filing: **20.05.2024**

(51) International Patent Classification (IPC):
*G06T 11/00* (2006.01)

(52) Cooperative Patent Classification (CPC):
**G06T 11/006;** G06T 2211/424; G06T 2211/441

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.05.2023 GB 202307655**

(71) Applicant: **Elekta Limited
West Sussex RH10 9RR (GB)**

(72) Inventors:
- **HELLMAN, Fredrik
Crawley, RH10 9RR (GB)**
- **SYED, Sabina
Crawley, RH10 9RR (GB)**
- **STENBERG, Josefin
Crawley, RH10 9RR (GB)**

(74) Representative: **Haseltine Lake Kempner LLP
Cheapside House
138 Cheapside
London EC2V 6BJ (GB)**

(54) **METHOD AND SYSTEM FOR TOMOGRAPHIC RECONSTRUCTION**

(57) A computer-implemented method of tomographic reconstruction, the method comprising: receiving an input dataset comprising tomographic projection data of an object; and reconstructing an image of the object using an iterative reconstruction technique, wherein the iterative reconstruction technique seeks to minimize a cost function, the cost function including a first regularizer and a second regularizer, wherein the first regularizer is a first trained machine learning model, trained using image data associated with the object and extracted from a first direction and the second regularizer is a second trained machine learning model, trained using image data associated with the object and extracted from a second direction.

Receive an input dataset comprising tomographic projection data of an object. — 102

Reconstruct an image of the object using an iterative reconstruction technique, wherein the iterative reconstruction technique seeks to minimize a cost function, the cost function including a first regularizer and a second regularizer, wherein the first regularizer is a first trained machine learning model, trained using image data associated with the object and extracted from a first direction, and the second regularizer is a second trained machine learning model, trained using image data associated with the object and extracted from a second direction. — 104

Figure 1

EP 4 468 243 A1

**Description**

**Field of the Invention**

The present invention relates to methods and systems for tomographic reconstruction. More specifically, the present invention relates to a computer-implemented method for tomographic reconstruction, and data processing apparatuses, computer programs, and non-transitory computer-readable storage mediums configured to execute methods for tomographic reconstruction.

**Background of the Invention**

Tomography is a non-invasive imaging technique, which allows visualisation of the internal structures of an object without the superposition of other structures that often afflict conventional projection images. For example, in a conventional chest radiograph, the ribs, heart, and lungs may be superimposed upon the same film, whereas a computed tomography (CT) slice is able to capture each organ in its actual three-dimensional position. Tomography been applied across a range of disciplines, including medicine, physics, chemistry, and astronomy. While X-ray CT is perhaps the most familiar application of tomography, tomography may be performed using alternative imaging modalities, including ultrasound, magnetic resonance, nuclear-medicine, and microwave techniques.

As an example, in conventional X-ray CT scanning, an X-ray source projects a beam of X-rays through a patient and a detector measures attenuation of the X-rays. At the same time, the apparatus is rotated about an axis passing longitudinally through the patient. Thus, the detector acquires data indicating the attenuation of the beam in each direction in the plane in which rotation takes place. From this data (typically in the form of a sinogram), computational means may compute the internal structure of the patient on that specific plane (or "slice"). The patient or apparatus may then be indexed along the axis and a further plane may be investigated. In this manner, a three-dimensional image of the patient may be constructed from the various slices.

Mathematically, the raw data acquired by a tomographic detector consists of multiple "projections" of the object being scanned. These projections are effectively the Radon transformation of the structure of the object. Reconstruction by means of tomographic reconstruction essentially involves solving the inverse Radon transformation.

Many practical reconstruction algorithms have been developed to implement the process of reconstruction of a three-dimensional object from its projections. These algorithms are designed largely based on the mathematics of the Radon transform, on statistical knowledge of the data acquisition process, and on geometry of the data computing means. Example reconstruction algorithms include filtered back projection algorithms and Fourier-domain reconstruction algorithms.

Inherent, however, in many reconstruction algorithms are the problems associated with the intrinsic ill-posed nature of inverse problems. That is, often, it is not possible to exactly solve the inverse problem directly. The reconstruction of an image from the acquired data is an inverse problem. In this case, a direct algorithm has to approximate the solution, which often gives rise to visible reconstruction artefacts in the image. For example, filtered back projection algorithms are prone to artefacts in the form of discontinuities and prone to significant noise in reconstructed images.

Iterative algorithms approach the correct solution using multiple iteration steps, which allows one to obtain a better reconstruction at the cost of a higher computation time. Broadly speaking, iterative algorithms begin with an assumed image, compute projections from the image, compare the original projection data, and update the image based upon the difference between the calculated and the actual projections. The advantages of the iterative approach include improved insensitivity to noise and the capability of reconstructing an optimal image in the case of incomplete data. Many iterative algorithms involve some cost function, which is to be minimized. Often these cost functions include some form of regularization.

For example, in variational reconstruction algorithms for cone beam CT (CBCT), a regularizer may be used to control the noise in the resulting image. Common regularization techniques include Tikhonov regularization (also known as Ridge regression or weight decay) and Total Variation (TV) regularization. TV regularization and variants thereof, such as pseudo-Huber TV, are common as a reference methods in the evaluation of new reconstruction algorithms in the field.

The regularizers involved in many regularization techniques (including both of the above both of example techniques) are commonly referred to as handcrafted regularizers, since their functional form has been designed by hand.

However, the popularity is rising for more sophisticated approaches, such as learned regularizers, that may capture more intricate features by comparing high and low quality images during training. From a Bayesian perspective, these regularizer may be interpreted as coding the prior knowledge of the image to be reconstructed. In the context of medical imaging, the prior distribution is determined by the regularizer, based on previous patient data, the likelihood is estimated by the statistical error of the measurements, and the maximum-a-posteriori estimate corresponds to the desired patient image.

The inventors have come to the realisation that existing regularization techniques for use in tomographic reconstruction are well-suited to the reconstruction of two-dimensional slices of objects, but are not well-suited when extending image reconstruction into three-dimensions. This task is computationally expensive and, as mentioned above, often requires handcrafting of regularizers, which is a time-consuming burden placed on the user. Inevitably, the applicability of handcrafted regularizers is often limited only to the task for which the regularizer was crafted.

In the context of medical imaging, high image quality, such as high contrast, homogeneity, and resolution, during radiation therapy is an important aid to accurately adjust, for instance, cancer treatments according to the current medical state of the patient. This increases the efficiency of the radiation, since it is delivered more precisely to the cancerous zone, and reduces the radiation doses on other organs.

The inventors have therefore realized that improvements to tomographic reconstruction techniques are required.

## Summary of the Invention

The invention is defined in the independent claims, to which reference should now be made. Further features are set out in the dependent claims.

According to an aspect, there is provided a computer-implemented method for tomographic reconstruction. The method comprises receiving an input dataset comprising tomographic projection data of an object. The input dataset may be received from external computational means, such as a data storage server or directly from an imaging system. The tomographic projection data may be acquired using any tomographic imaging modality, including, but not limited to, computed tomography (CT) and variations thereof, X-ray, ultrasound, or magnetic resonance imaging (MRI).

The tomographic projection data may be processed to extract a first subset of planar image data, extracted from a first direction (that is, along a first axis). That is, a set of slices in planes within a volume defined by the two axes perpendicular to the first axis. For example, in a cartesian coordinate system comprising x, y and z axes, the first subset of data may be extracted along the z-axis and include tomographic slices from the x - y plane(s). Similarly, the tomographic projection data may be processed to extract a second subset of planar image data, extracted from a second direction (along a second axis). For example, the second subset of data may be extracted along the y-axis and include tomographic slices from the x - z plane(s). The skilled reader will appreciate that the cartesian coordinate system with mutually orthogonal x - y - z axes described here is an example; the method for tomographic reconstruction is also applicable to non-orthogonal or skew coordinate systems, so long as the first axis and second axis are not the same (that is, the tomographic projection data captures object projections - which may be extracted - from different directions).

The method further comprises reconstructing an image of the object using an iterative reconstruction technique. These techniques allow for more complex modelling of the imaging process than conventional image reconstruction techniques, such as the Feldkamp Davis Kress Algorithm (FDK) algorithm. The iterative reconstruction technique seeks to minimize a cost function (or penalty function). Equivalently, the technique may seek to maximise a reward function. The cost function used in the iterative reconstruction technique includes a first regularizer and a second regularizer.

As used herein, the term "regularizer" refers to a model used in an inverse problem to introduce prior information and to bias the solution towards a class of expected solutions. These regularizers aid in stabilizing and repressing the non-uniqueness in the reconstruction. In turn, this means that the reconstruction will be less sensitive to noise in the measurements and that it is unlikely that multiple candidate images that may be derived from the same input dataset will be generated.

The first regularizer is a trained machine learning model. For instance, the machine learning model may be a neural network. The machine learning model is trained using image data associated with the object. That is, the image data is of the same object or class of objects as the object for which reconstruction is being performed. For instance, where the object is a patient and the tomographic projection data is acquired using a CBCT scan of the patient's torso, the image data associated with the object is similarly CBCT scan data of patients' torsos. Further, the image data associated with the object is extracted or acquired from the same first direction as the first subset of tomographic image data. That is, with the example of patients' torsos, the first subset of tomographic image data and image data associated with the object for use in training the first regularizer both capture the torso from the same direction, e.g., perpendicular to the long axis of the patient when lying on a couch of a scanner.

The second regularizer is also a trained machine learning model, trained using image data associated with the object and extracted from the second direction. The machine learning models associated with the first and second regularizers need not be the same in terms of machine learning architecture or underlying structure.

The machine learning models may include, but are not limited to, neural network (NN) models, convolutional neural network (CNN) models, deep neural network (DNN) models, and the like. The machine learning models may be trained from scratch or, in some examples, the machine learning models may be updated via refinement training (or fine-tuning) of the machine learning model using image data generated by the computing means.

In this way, reconstruction of the image of the object using the iterative reconstruction technique may include extraction of slices in the planes (in the first direction and the second direction) from intermediate image data (i.e., a 3D volume) during the reconstruction. The reconstruction may then include solving an optimization problem iteratively, until convergence. After convergence, the optimal solution (in this context, the reconstructed image) may be output.

Embodiments are capable of producing high quality images, including such desirable features as high contrast, homogeneity, and resolution.

Known recent research outside the scope of the present invention shows promising results for reconstruction of 2D CT images. This known research is limited to image slices within two dimensions, however. The most intuitive extension into three dimensions involves replacement of 2D modules (such as 2D convolutional layers within machine learning models) with comparable 3D modules. However, this approach is expected to be very computationally cumbersome. Embodiments are able to extend techniques into three dimensions (that is, generate three dimensional reconstructions of objects) with only limited memory. The inventors have shown efficacy of techniques with limited memory capacity (46GB on GPU), avoiding the need to train on large-scale data sets and to design complex machine learning models.

Embodiments display the ability to capture volumetric properties, while known techniques are able only to considers one single plane during model training and image reconstruction.

Optionally, the tomographic projection data may processable, so as to extract a third subset of data, extracted from a third axis (that is, a third direction, different to the directions associated with the first and second axes). The three axes can be mutually orthogonal and may define mutually orthogonal planes. In this way, the topographic image reconstruction technique may reconstruct images of the object from any mutually orthogonal plane. Additionally, the cost function includes a third regularizer, which may also be a trained machine learning model, trained using image data associated with the object and extracted from the third direction. The machine learning models associated with the three regularizers need not be the same in terms of machine learning architecture or underlying structure.

Optionally, the tomographic reconstruction is medical tomographic reconstruction, performed in a medical context. In this context, the object may be a patient (or a part thereof). For instance, where the object is a patient, the images of the patient may incorporate various anatomies, structures, or compositions of a human or animal. The tomographic projection data may be CBCT data. The techniques are well-suited to medical imaging, particularly for such applications as radiation therapy and treatment planning, where the reconstructed images may be used to accurately plan and adjust medical treatment procedures, thereby increasing the efficiency of procedures. The medical tomographic reconstruction techniques may be further used for such applications as diagnostic imaging, interventional imaging, and/or surgical imaging.

Optionally, the iterative reconstruction technique uses a gradient descent algorithm. Iterative construction techniques are advantageous relative to common techniques such as filtered back projection, which typically reconstructs images in a single step and thereby generates inaccurate reconstructions. Gradient descent algorithms in this context are relatively insensitive to noise and capable of reconstructing optimal images even with incomplete data. Optionally, the iterative reconstruction technique may be a learned iterative reconstruction technique, using machine learning to finesse the updating algorithm. For instance, the iterative reconstruction technique may be a variant of the ordered subset (OS) method with momentum.

Optionally, any or all of the machine learning models (that is, the regularizers) may be trained using a stochastic gradient descent algorithm. This training is performed prior to implementation within the iterative reconstruction technique. For instance, the Adam optimization algorithm may be used.

Optionally, any or all of the machine learning models may be trained in a weakly supervised manner. This is useful in cases when the training data is not entirely labelled, implying that either only a subset is labelled, or that the labels are noisy and/or inaccurate. For instance, this may indicate that training pairs of unregularized reconstructions and target samples are not fully aligned or do not representing the exact same content. In the medical context, this could correspond to having a 2D CBCT slice compared with a CT image from the same patient as ground truth, but captured from another angle. Thus, weak supervision is particularly advantageous where complete training datasets are difficult to obtain, such as in the medical field where patient privacy and security is a concern.

Optionally, any or all of the machine learning model (regularizers) are adversarial convex regularizers. An advantage of the adversarial approach is that it performs well, while not being reliant on any paired training data. Instead, a mix of images of high and low quality may be used directly as unpaired training data.

Optionally, the image data associated with the object (and additionally extracted from the first direction) is split into training subsets. A first training subset includes higher quality data, which provide ground truth data for training purposes. A second training subset comprises relatively lower quality data providing training input data. The quality of the data may be determined empirically, or may be determined using such metrics as noise and/or the presence of artefacts.

Optionally, the first training subset comprises CT scan data and the second training subset comprises CBCT scan data. CBCT scans, while typically faster to acquire and which typically deliver a lower dose of radiation to the patient, are more prone than CT to such artefacts as scattering and beam-hardening. Of course, conversely, the first training subset may be CBCT scan data and the second training subset may be CT scan data.

Optionally, the second training subset is simulated data, generated from the first training subset. For instance, where the first training subset comprises CT scan data, the second training subset may be simulated CBCT data. This is advantageous, for example, where distinct (non-simulated) datasets may include inconsistent setups of the patients during respective scans, leading to very distinct image pairs and subsequent poor reconstruction results. In this way, this avoids the practitioner (e.g., a clinician) ensuring that couch positions are perfectly aligned during subsequent image acquisition processes, and avoids the need to perform time-consuming image registration and alignment.

According to a related aspect, there is provided a computer-implemented method of generating a training dataset for a machine learning model, in particular any or all of the regularizers described above. The method involves receiving computed tomography, CT, scan data of multiple patients (which may or may not be the same patient as described above, in respect of embodiments of the method for tomographic image reconstruction). This scan data may be received from external computational means, such as a data storage server or directly from an imaging system.

The method involves reconstructing ground truth images using a reconstruction technique on the CT scan data. This known reconstruction technique may be the reconstruction technique described above, involving pre-learned regularizers. Alternatively, the reconstruction technique may be the commonly used Feldkamp David Kress (FDK) algorithm, which is highly computationally efficient.

The method involves generating training images, for use alongside the ground truth images in a training process. The training images may be generated through the addition of quantum noise to the CT scan data of multiple patients, thereby forming intermediate data. Of course, further data augmentation techniques are possible. Data augmentation may also be performed in order to supplement and improve the training dataset. Data augmentation may include, but is not limited to, flipping images across a central axis (e.g. up-down, right-left, etc), scaling, zoom, etc. Similarly, learning and training datasets may include data collected from various imaging modalities (e.g. MR data may be used in a ML regularizer for CT reconstruction). The training images are then generated by reconstructing the intermediate data using the reconstruction technique (or, alternatively, a distinct reconstruction technique to that described in respect of the ground truth image reconstruction).

The method then involves splitting the ground truth images and training images (which may be labelled accordingly) into a training set, used to fit the machine learning model, and a testing set, used to evaluate the fit machine learning model. The skilled reader will appreciate the ratio of the split will depend on the anticipated computational cost of training and evaluating the model. An example suitable split for training and testing is 85:15.

Of course, the method (or steps thereof) may be repeated for each machine learning model. For instance, where there are two (or more) machine learning models (regularizers), the method may reconstruct two (or more) sets of ground truth images and two (or more) sets of training images.

This method of generating a training dataset for a machine learning model is advantageous in scenarios where it is difficult to obtain substantially large datasets, as set out above.

Embodiments of another aspect include a data processing apparatus comprising a memory storing computer-readable instructions and a processor. The processor (or controller circuitry) is configured to execute the instructions to carry out the computer-implemented method of tomographic reconstruction and/or the computer-implemented method of generating a training dataset for a machine learning model for use in tomographic reconstruction.

Embodiments of another aspect include a computer program comprising instructions, which, when executed by computer, causes the compute to execute the computer-implemented method of tomographic reconstruction and/or the computer-implemented method of generating a training dataset for a machine learning model for use in tomographic reconstruction.

Embodiments of another aspect include a non-transitory computer-readable storage medium comprising instructions, which, when executed by a computer, causes the compute to execute the computer-implemented method of tomographic reconstruction and/or the computer-implemented method of generating a training dataset for a machine learning model for use in tomographic reconstruction.

The invention may be implemented in digital electronic circuitry, or in computer hardware, firmware, software, or in combinations thereof. The invention may be implemented as a computer program or a computer program product, i.e., a computer program tangibly embodied in a non-transitory information carrier, e.g., in a machine-readable storage device or in a propagated signal, for execution by, or to control the operation of, one or more hardware modules.

A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular embodiments. Other embodiments are within the scope of the following claims. For example, the steps of the invention may be performed in a different order and still achieve desirable results.

Elements of the invention have been described using the terms "processor", "input device" etc. The skilled person will appreciate that such functional terms and their equivalents may refer to parts of the system that are spatially separate but combine to serve the function defined. Equally, the same physical parts of the system may provide two or more of the functions defined. For example, separately defined means may be implemented using the same memory and/or processor as appropriate.

**Brief Description of the Drawings**

Reference is made, by way of example only, to the accompanying drawings in which:

Figure 1 is a flow chart of a general method for tomographic reconstruction, according to embodiments;
Figure 2 is a schematic diagram of an example volume used for training a regularizer, slicing the volume into three sets of orthogonal planes;
Figure 3 is an example neural network architecture, suitable for use as an adversarial convex regularizer in embodiments;
Figure 4 is flow chart of a general method for generating a training dataset for a machine learning model for use in tomographic reconstruction, according to embodiments;
Figure 5 is a pipeline of image reconstruction using simulated data, according to embodiments;
Figure 6 is a pipeline outlining simulation for CBCT scan generation based on CT volumes;
Figure 7 is a set of a CT and CBCT images, including a slice of an original CT image in a sample dataset, a slice of the transformed CT image used as a target, and a slice of a simulated noisy CBCT scan;
Figure 8 is a set of reconstructed CBCT images, using a comparative multi-slice 2D model;
Figure 9 is a pair of plots of PSNR and SSIM for the comparative multi-slice 2D model;
Figure 10 is a pair of plots of the average PSNR and the average SSIM as a function of weighting for the x - y plane for a 3-plane multi-slice model, according to embodiments, in comparison to benchmark techniques;
Figure 11 is a pair of plots of PSNR and SSIM for the 3-plane multi-slice model, according to embodiments, in comparison to benchmark techniques;
Figure 12 is a set of reconstructed CBCT images, using a 3-plane multi-slice 2D model, according to embodiments;
Figure 13 is a plot of the MTF for a 3-plane multi-slice 2d model, according to embodiments,
in comparison to benchmark techniques;
Figure 14 is a summary of key metrics for different reconstruction techniques;
Figure 15 is comparison of reconstructed CBCT images using different reconstruction techniques, in the x - y plane;

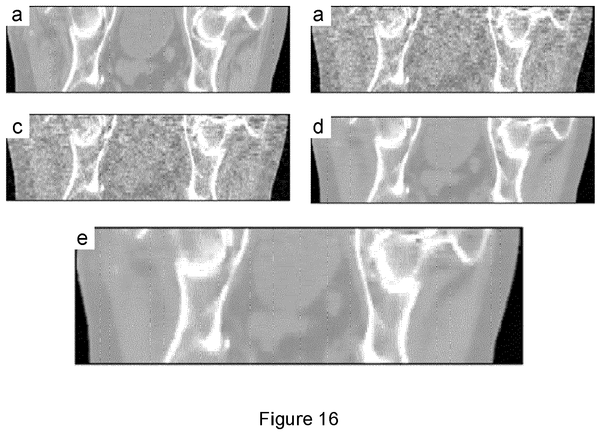

Figure 16 is comparison of reconstructed CBCT images using different reconstruction techniques, in the x - z plane; and
Figure 17 is a diagram of suitable hardware for implementation of invention embodiments.

**Detailed Description**

Generally, CBCT image reconstruction may be described as follows. First, the tomographic image may be converted into a discretization of pixels represented by a discrete matrix of unknown variables. The detected projections through the body may then be modelled as a set of linear equations, based on the measured attenuation of X-ray intensities of the discretized image.

More specifically, the reconstruction problem may be formulated as recovering the deterministic but unknown $x^* \in X$, based on the measured data $y \in Y$. The measurement model is assumed to be on the form $y = \mathcal{A} x^* + \varepsilon$, where $\varepsilon \in Y$ denotes the measurement error. Here, $\mathcal{A} : X \to Y$ is the linear operator that represents the resulting system of linear equations obtained after the discretization of the image. The desired $x^*$ is obtained through formulating a reconstruction method, where a key challenge involves overcoming the fact that $\mathcal{A}$ in practice may either be under-determined or poorly conditioned with an unstable inverse, making the inversion problem ill-posed.

One commonly used method for image reconstruction is the Feldkamp Davis Kress Algorithm (FDK) algorithm. This yields an analytical solution, which is highly computationally efficient. However, the performance may be lacking for low dose, noisy scenarios in medical imaging. For these situations, iterative reconstruction may be utilized instead.

Iterative reconstruction techniques allow for more complex modelling of the imaging process, where the geometry system and the X-ray physics, for instance, may be included to obtain better reconstructions. To solve for the desired image, the reconstruction task is usually formulated as an optimization problem, where a penalty function is minimized to obtain the reconstruction:

$$x^*(y) := \arg\min_{x \in X} \mathcal{L}_Y (\mathcal{A}x, y) \qquad \text{(Eqn. 1)}$$

$$\mathcal{L}_Y : Y \times Y \to \mathbb{R}$$ is referred to as the data fidelity term and is often taken to be the least-squared loss $$\mathcal{L}_Y := ||\mathcal{A}x - y||_2^2 .$$

To combat the ill-posed nature of the inversion problem, regularization may be introduced in Equation 1 to impose conditions, which aid in stabilizing and repressing the non-uniqueness in the reconstruction. This means that the reconstruction will be less sensitive to noise in the measurements and that there are not multiple candidate images that may be derived from the same original measured data. The augmented general objective function then becomes:

$$x_\theta^*(y) := \arg\min_{x \in X} \mathcal{L}_Y(\mathcal{A}x, y) + \mathcal{R}_\theta(x) \qquad \text{(Eqn. 2)}$$

Here, $\theta$ is some hyperparameter chosen depending on the noise level of the data. The term $\mathcal{R}_\theta(x)$ represents the previously mentioned regularization. The term may vary based on which regularization method is selected.

As mentioned above, learned regularizers are increasingly applied within cutting edge reconstruction techniques. Learned regularizers are a branch within regularization and is a collective name for regularization based on neural networks trained in a supervised, unsupervised, or weakly supervised manner. These may be utilized for the choice of the regularizer $\mathcal{R}_\theta(x)$ in Equation 2. As mentioned, the regularizers may combat the ill-posed problem of the reconstruction step in medical imaging.

The inventors have realised that tomographic reconstruction may be implemented for tomographic image reconstruction using learned regularizers. Of course, the general techniques may be applied to tomographic images or projection data acquired using many different imaging modalities.

Recent work from Mukherjee, S. et al. "Learned convex regularizers for inverse problems" (arXiv:2008.02839v2) has investigated the performance of learned regularizers in CT medical imaging. However, this work uses two-dimensional convolution layers. Extending to three-dimensional convolution layers introduces significant memory and processing power concerns. The inventors have realised it is desirable to extend the applicability of this concept.

The inventors have considered the notion that a CBCT volume consists of multiple 2D slices stacked on each other. In this way, each volume may be decomposed into several 2D images in the depth dimension, and thereby, 2D convolutional layers are suitable for use within the regularizer. The training set may then effectively be a collection of 2D images instead of 3D volumes, as would be used in perhaps the most intuitive extension to known work, such as that of Mukherjee, S. et al. Hence, larger neural networks may be trained as the 2D kernels do not consume as much memory inherently as the 3D ones, which is a prerequisite for high performance in this complex context. The desired outcome is that, although the 3D volumes are collapsed into a set of 2D images, the model is able to generalize to some extent when evaluated on unseen 3D volumes.

A disadvantage with this procedure is that the spatial connection between adjacent slices is lost, possibly resulting in less accurate reconstructed images.

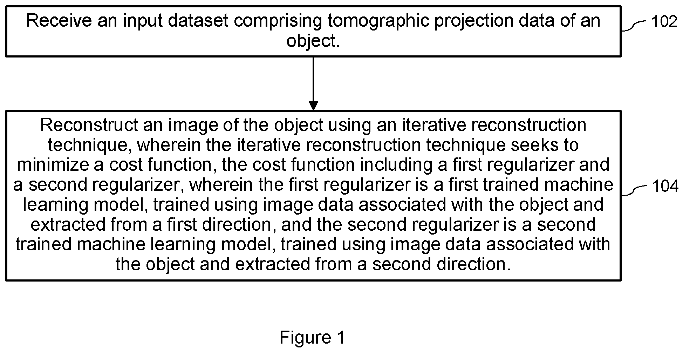

FIGURE 1 is a flowchart of a general method of tomographic reconstruction according to embodiments, involving learned regularizers, for multiple axes or directions, which addresses the above disadvantages. The method may be implementing by any suitable computing means.

At step 102, the computing means receives an input dataset comprising tomographic projection data of an object. The tomographic projection data may be processable, so as to extract a first subset, extracted from a first direction, and a second subset, extracted from a second direction.

At step 104, the computing means reconstructs an image of the object using an iterative reconstruction technique. The iterative reconstruction technique seeks to minimize a cost function, where the cost function includes a first regularizer and a second regularizer. The first regularizer is a first trained machine learning model, which is trained using image data associated with the object. The image data for training the first regularizer is extracted from the first direction. The second regularizer is a second trained machine learning model, which is trained using image data associated with the object. The image data for training the second regularizer is extracted from the second direction.

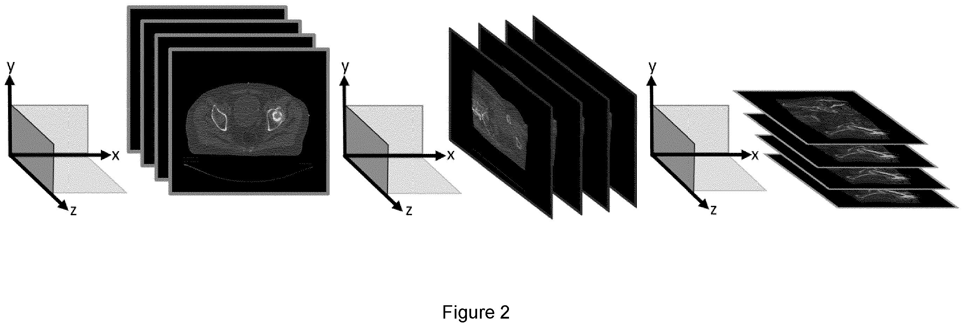

As a representative example, consider CBCT reconstruction using three orthogonal planes (or, strictly, three sets of orthogonal planes). with the aim to cover spatial information in three dimensions. In particular, three sets of orthogonal planes in 2D, that is, $x$ - $y$, $x$ - $z$, $y$ - $z$, serve as a foundation for training three neural networks with 2D convolutional layers. As an example, consider the $x$ - $y$ case. The volumes are collapsed into 2D slices along the z-axis. A neural network is then trained based on these slices. This procedure is repeated for the two remaining planes before moving into the iterative reconstruction step. There, the 2D gradients are combined for each given slice, which represents the final 3D gradient of the regularizer, used to find the optimal image. The 3-plane logic is visualized in FIGURE 2, and an example algorithm for computing the 3D gradient is outlined in Table 1, below.

$$
\begin{aligned}
&\textbf{Result: } \text{gradient } \nabla_x \mathcal{R}_\theta(x_k) \text{ at iteration } k \\
&\textbf{Input: } x_k, \lambda, w_{xy}, w_{xz}, w_{yz}, \mathcal{R}_{\theta xy}, \mathcal{R}_{\theta xz}, \mathcal{R}_{\theta yz} \\
&\textbf{for } xy\text{-plane, } xz\text{-plane, } yz\text{-plane } \textbf{do} \\
&\quad\quad \textbf{for } 2D\text{-slices in plane } \textbf{do} \\
&\quad\quad\quad\quad grad_{slice} \leftarrow \nabla_x \mathcal{R}_{\theta plane}(slice) \\
&\quad\quad\quad\quad grad_{plane}[slice] \leftarrow grad_{slice} \\
&\quad\quad \textbf{end} \\
&\textbf{end} \\
&\nabla_x \mathcal{R}_\theta(x_k) \leftarrow \lambda \cdot (w_{xy} \cdot grad_{xy} + w_{xz} \cdot grad_{xz} + w_{yz} \cdot grad_{yz}) \\
&\textbf{return } \nabla_x \mathcal{R}_\theta(x_k)
\end{aligned}
$$

Table 1. Algorithm for computing the gradient of the regularizer with respect to input.

In Table 1, $x_k$ denotes the current reconstructed image at iteration $k$, $w_{xy}$, $w_{xz}$, and $w_{yz}$ are weight parameters that control the effect of each plane, and $\mathcal{R}_{\theta xy}$, $\mathcal{R}_{\theta xz}$ and $\mathcal{R}_{\theta yz}$ are the trained regularizers in each plane. This approach is expected to perform better than a single plane (or sets thereof) approach, as additional information in the remaining directions is given, which therefore enables spatial interaction to some extent.

Regularizers may be implemented as adversarial convex regularizers (ACRs). The learning problem of ACR is neural network-based, which by comparison of desirable and undesirable images builds a deep learning-based regularizer. Similar to known generative adversarial network (GAN) frameworks, a regularizer neural network is trained as a critic, much like the discriminator of GAN networks. The target images $x \in X$ are thought of as samples from a distribution $\mathbb{P}_r$, and the measurements $y \in Y$ correspondingly from $\mathbb{P}_Y$. The distribution $\mathbb{P}_Y$ is mapped to the distribution $\mathbb{P}_n$, which denotes the image space, by applying a - potentially regularized - pseudo-inverse $A_\delta^\dagger$. $\mathbb{P}_n$ is thus representing the distribution of the noisy images. Let # be the push-forward of measures, that transfers a measure from one measurable space onto another. Then, $A_\delta^\dagger \sim \left(A_\delta^\dagger\right)_\# \mathbb{P}_Y$ for $Y \sim \mathbb{P}_Y$, and $\mathbb{P}_r$ is defined through $\mathbb{P}_r = \left(A_\delta^\dagger\right)_\# \mathbb{P}_Y$.

The neural network critic should be able to tell apart target images from reconstructed images of measurements. This translates to the regularizer $\mathcal{R}_\theta$ being able to distinguish the distributions $\mathbb{P}_r$ and $\mathbb{P}_n$. The Wasserstein distance, defined as:

$$
W\left(\mathbb{P}_r, \mathbb{P}_n; \mathcal{R}_\theta(X)\right) = \mathbb{E}_{X \sim \mathbb{P}_r}[\mathcal{R}_\theta(X)] - \mathbb{E}_{X \sim \mathbb{P}_n}[\mathcal{R}_\theta(X)]
\qquad \text{(Eqn. 3)}
$$

provides a measure of the distance between the average output of regularized samples $\mathcal{R}_\theta(X)$ for the target distribution $\mathbb{P}_r$, and the average output of $\mathcal{R}_\theta(X)$ for samples from $\mathbb{P}_n$. It is desirable to have a small value of the first term while having a high value of the second term, since this corresponds to the critic having the described features as above.

Hence, it is of interest to minimize the Wasserstein distance when training the critic. Therefore, it is a justified choice of loss function in the learning problem. The optimal parameter choice $\theta^*$ may be obtained as:

$$
\theta^* := \underset{\theta}{\arg\min} \; \mathbb{E}_{X \sim \mathbb{P}_r}[\mathcal{R}_\theta(X)] - \mathbb{E}_{X \sim \mathbb{P}_n}[\mathcal{R}_\theta(X)]
\qquad \text{(Eqn. 4)}
$$

$$
\text{subject to } \mathcal{R}_\theta \in 1 - Lipschitz
$$

The Lipschitz constraint on $\mathcal{R}_\theta$ (X) is included in order to enforce smoothness and stability of the loss function. This constraint may be relaxed by adding a term to the loss function, altering it to be:

$$\theta^* := \underset{\theta}{\mathrm{argmin}}\ \mathbb{E}_{X\sim\mathbb{P}_r}[\mathcal{R}_\theta(X)] - \mathbb{E}_{X\sim\mathbb{P}_n}[\mathcal{R}_\theta(X)] + \lambda_{gp}\cdot\mathbb{E}\left[\left(\left\|\nabla\mathcal{R}_\theta\left(X^{(\epsilon)}\right)\right\| - 1\right)^2\right] \qquad \text{(Eqn. 5)}$$

where $\lambda_{gp}$ controls the influence of the Lipschitz constraint, and $X(\varepsilon)$ is sampled uniformly from the line segment between $A_\delta^\dagger Y$ and the target images $X$. This sampling is done by first drawing $\varepsilon$ - $U[0,1]$ and then setting $X(\epsilon) = \epsilon X + (1-\epsilon)A_\delta^\dagger$.

The variational regularization problem as presented in Equation 2 is a conventional method used for image reconstruction, where the data fidelity term $\mathcal{L}_Y := \|\mathcal{A}x - y\|_2^2$ establishes consistency of the reconstructions $x$, given the measurements $y$. In contrast to other reconstruction methods, where deep learning is applied in the reconstruction step, the AR and ACR framework maintains coherency to the measured data through the data fidelity term. The learned part of the method is introduced as a regularizer that combats issues with noise, low contrast and other artefacts, while not interfering with the data fidelity term. This ensures a level of transparency of how the image is derived, which is of high importance in medical imaging, as the interpretability of how each image is generated is important.

The ACR is an input-convex neural network (ICNN), introduced in Mukherjee, S. et al. "Learned convex regularizers for inverse problems" (arXiv:2008.02839v2). The ACR defined on $L^2$, which represents two-dimensional images. With the notation presented in the original document, the activation spaces of the considered network are set to $\mathbb{V}_L = L^2([0,1]^{n_i})$, where $i = 0, \dots, L$ - 1, $n_i$ is the number of filters in layer $i$, $L$ is the number of layers used, $\mathbb{V}_0 = \mathbb{X}$ and $\mathbb{V}_L = \mathbb{R}$ are natural input and output spaces. If the input $x \in \mathbb{V}_0$ and $0 =: z_0 \in \mathbb{V}_0$, then the output of every layer may be defined as:

$$z_{i+1}(x) = \varphi_i\big(\mathcal{B}_i\left(z_i(x)\right) + \mathcal{W}_i(x) + b_i\big), i = 0,\dots,L \qquad \text{(Eqn. 6)}$$

with $\varphi_i : \mathbb{V}_{i+1} \to \mathbb{V}_{i+1}$ representing the activation functions, which are applied pointwise on the argument, and are constrained to be convex monotone functions from $\mathbb{R}$ to $\mathbb{R}$. Moreover, $\mathcal{B}_i : \mathbb{V}_i \to \mathbb{V}_{i+1}$ and $\mathcal{W}_i : \mathbb{V}_0 \to \mathbb{V}_{i+1}$ are bounded integral transforms, here convolutional layers, where the kernels of each $\mathcal{B}_i$ is assumed to be pointwise non-negative, contributing to imposing convexity in the network by only allowing non-negative weights. The $b_i \in \mathbb{V}_{i+1}$ are bias terms, and applying a global-average pooling operator, called $\mathcal{H}_{avg}$, on $z_{L+1}$, that is, $\mathcal{R}'$ (x) = $\mathcal{H}_{avg}$ $(z_{L+1}(x))$, yields the final output of the neural network $\mathcal{R}'$ from $\mathbb{V}_0$ to $\mathbb{R}$.

Training this neural network amounts to finding the optimal parameters $\{\mathcal{B}_i, \mathcal{W}_i, b_i\}_{i=0}^L$ associated with the used convolutional layers. Thus, if letting these unknown parameters be denoted be $\theta$, then the regularizer is parametrized as $\mathcal{R}'_\theta$.

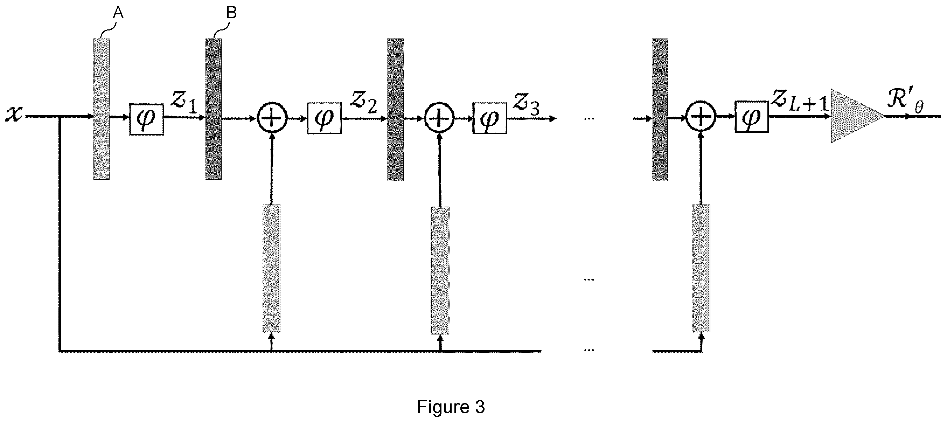

FIGURE 3 displays the developed architecture of $\mathcal{R}'_\theta$ schematically, as used in worked examples throughout. The diagram is reproduced and adapted from the work of Mukherjee, S. et al (arXiv:2008.02839v2). The lighter grey blocks (A) represent convolutional layers with parameters $\{\mathcal{W}_i, b_i\}_{i=0}^L$, where the weights are arbitrary. $\varphi_i$ corresponds

to the activations, here taken to be the leaky ReLU function in all layers. The darker grey blocks (B) symbolize convolutional layers, $\{\mathcal{B}_i\}_{i=i}^{L}$, containing only nonnegative weights in order to preserve convexity of the output. Lastly, the obtained response $z_{L+1}$ is passed through the global-average pooling layer denoted by the gray triangle, producing the final output of the neural network.

In one implementation, this convex regularizer may be trained with the Adam optimizer, using the learning objective and imposing the gradient penalty described in Equation 5.

A training algorithm for finding optimal parameters $\theta$ is presented in the work of Mukherjee, S. et al. This training may be repeated until convergence is obtained. This training procedure may be used in a supervised or a weakly unsupervised manner.

More specifically, the supervised manner entails using paired samples $\{x_i, \mathcal{A}^\dagger y_i\}$, with $x_i \sim \mathbb{P}_r$ and

$$y_i \sim \mathbb{P}_Y(y_i|x_i) = \mathbb{P}_{noise}\big(y_i - \mathcal{A}(x_i)\big) \,.$$

. The other option, also referred to as weakly supervised, uses unpaired samples instead, i.e., $\{x_i, \mathcal{A}^\dagger y_{(i)}\}$. Here, the samples $\{y_{(i)}\}_{i=1}^{N}$ are retrieved from random permutations on $y_i \sim \mathbb{P}_Y(y_i|x_i)$. This corresponds to cases when the training data is not entirely labelled, implying that either only a subset is labelled, or that the labels are noisy or inaccurate. In the image reconstruction setting, this may for instance be translated to having pairs of unregularized reconstructions and target samples which are not fully aligned or not representing the exact same content. In the medical context, this could correspond to having a 2D CBCT slice compared with a CT image from the same patient as ground truth, but captured from another angle.

An example pipeline of image reconstruction in the context of medical imaging may be performed as follows. In a first step, computational means may perform pre-processing and signal transformation of raw image detection from scanners. In a second step, the computational means chooses a regularizer $\mathcal{R}_\theta$. In a third step, the computational means enters the processed data into the loss function in Equation 2.

In a fourth step, computational means solve the optimization problem in Equation 2 iteratively until convergence, where the gradients of the data fidelity term and the regularizer are calculated in each step. Convergence may be defined by any suitable criteria. Generally, iterative methods are applied with some form of gradient descent scheme to approximate the true optimal solution. As an example, to initiate iterative reconstruction, one typically has an initial guess, or starting point, $x_0$, and then in each iterative step, updates the next $x_{k+1}$ for k = 0,1,2,..., based on the following example gradient descent algorithm:

$$x_{k+1} = x_k - \alpha\big(\nabla_x \mathcal{L}_Y(Ax_k, y) + \nabla_x \mathcal{R}_\theta(x_k)\big) \qquad \text{(Eqn. 7)}$$

where $\alpha > 0$ is the learning rate, or step size, of the algorithm and $\nabla_x$ refers to the sub gradient with respect to $x$. The inventors have used a variant of the ordered subset (OS) method with momentum described in Table III in the work of Kim, D. et al. (Combining ordered subsets and momentum for accelerated X-ray CT image reconstruction. IEEE Trans Med Imaging, 34(1):167-178, August 2014.) The skilled reader will appreciate that many other iterative methods are suitable.

In a fifth step, after convergence, the optimal solution $x^*$, i.e. the reconstructed image, may be displayed.

To demonstrate the efficacy of the technique, the inventors have chosen the learned regularizer to be $\mathcal{R}_\theta(x) = \sum_{i=1}^{N} \sqrt{\alpha^2 + \|grad_i x\|^2}$, with $\alpha$ as a regularization term and the gradient of the regularized TV term with respect to x becomes:

$$\big[\nabla R_\theta(x^k)\big]_i = -div_i\left(\frac{grad_i x^k}{\sqrt{\alpha^2 + \|grad_i x^k\|^2}}\right) \qquad \text{(Eqn. 8)}$$

where *k* denotes the current iteration, and the operators $grad_i$ and $div_i$ are approximations of the gradient and divergence in pixel *i* respectively.

For the following worked examples, due to the lack of readily accessible appropriate real medical data, the inventors have developed techniques for demonstrating training using simulated CBCT volumes. The input of the image reconstruction is simulated, which is also the data set for training the neural network-based regularizer. Of course, apart from the adjustments of input data, the pipeline follows the same scheme as the one with non-simulated data.

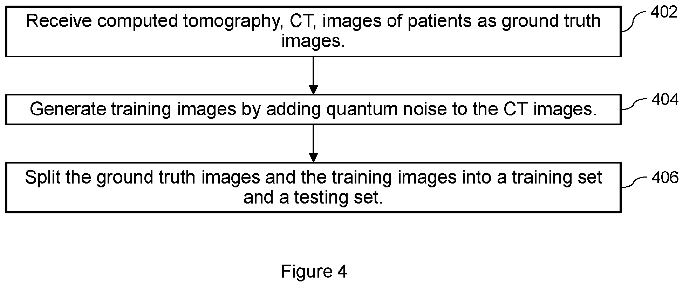

FIGURE 4 is a flowchart of a general method of tomographic reconstruction according to embodiments, involving learned regularizers, for multiple axes or directions, which addresses the above disadvantages. The method may be implementing by any suitable computing means.

At step 402, the computing means receives computed tomography, CT, images of patients. These serve as ground truth images.

The computing means may also segment (or otherwise label) the CT images into different types of tissue. For instance, segmentation may be used to segment the image to indicate regions of bone, soft tissue, and air. Interpolation may be used at this point, for instance to compute the density of various materials, based on grey-scale values of the ground truth CT images.

At step 404, the computing means generates training images by simulating CT acquisition of the objection, by adding quantum noise to the CT images. Differing levels of quantum noise may be included. For instance, for adversarial training purposes, such as with a GAN-based methodology, a "good" training set may include images with a low amount of simulated quantum noise, while a "bad" training set may include images with a high amount of simulated quantum noise. Quantum noise may be added to raw CT projection data (corresponding to the CT images), before this augmented raw data is reconstructed using known means.

At step 406, the computing means splits the ground truth images and the training images into a training set and a testing set.

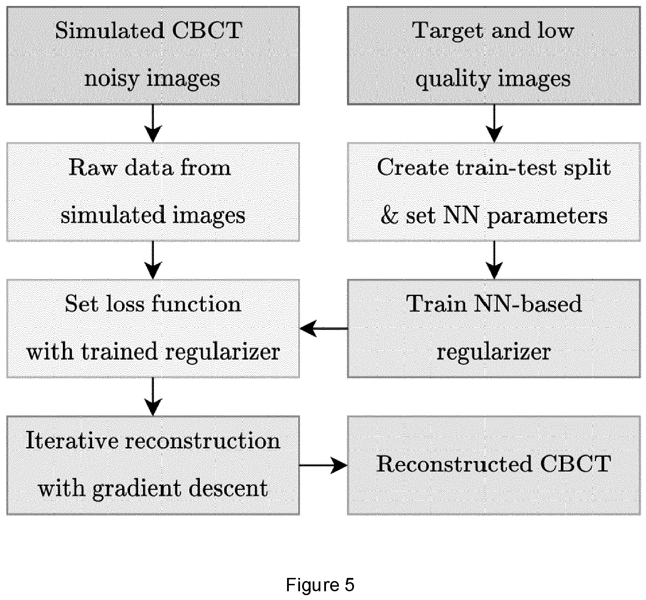

FIGURE 5 illustrates an example pipeline of image reconstruction using simulated data. Simulated CBCT noisy images and target (low) quality images are input. During intermediate setup stages, raw data is acquired from simulated images, and the target images are subject to a train-test split and the neural network parameters are initialised. The NN-based regularizers may then be trained, and the loss function may be set with the trained regularizers. Via iterative reconstruction with gradient descent (until a convergence criterium is achieved), the CBCT image may be reconstructed.

An example data set used for training the regularizers comprises 46 male patients, where each patient has pairs of CT and X-ray Volumetric Imager (XVI) CBCT scans of the pelvis. Given the high quality of the CT scans, these are a suitable choice as targets of the regularizer, whereas the CBCT scans represent the current low quality examples.

The couch, i.e., the board that the patient lays on during the scan, proved to be one substantial contributing factor to dissimilarities in the scans, since this completely shifted the position of the patient in the coordinate system. The start and stop position of the scans along the z-axis of the machine, i.e., along the spine of the patient, were also different between the CT and the CBCT version, making it difficult to align the volumes in a way such that each body part from the ground truth and the CBCT scan matched in each slice along the axis. In order to combat these obstacles, an approach of simulated data was chosen. The aspiration is that the models trained on simulated data will generalize when applied on real CBCT data.

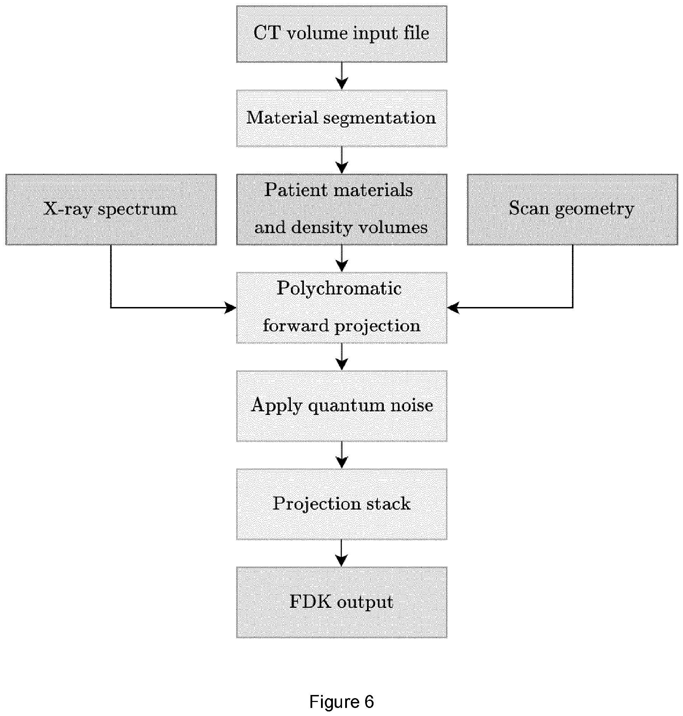

The simulated images were generated from the CT volumes of the patients. The ground truth images of the data set were obtained by transforming the CT volumes into a format that was compatible with results of CBCT scans, using the FDK. This transformation introduced some noise and did affect the quality of the target images mildly, while still maintaining it well enough for these volumes to function as targets. The undesirable images of the training data set were generated by simulating CBCT scans based on the original CT volumes, through introducing more quantum noise, and reconstructing using the FDK. The CBCT simulation is complex and the aim is to capture physical artefacts to mimic real CBCT scans to the largest extent possible. The pipeline of the simulation is illustrated in FIGURE 6.

As shown, the computational means first obtains a high-quality CT image of an object. The computational means then segment the CT image into different types of tissue (bone, soft tissue, air). The densities of the various materials may be computed based on the grey-scale value of the ground truth CT. The computational means then simulates a CT acquisition of the object with multiple levels of simulated quantum noise (and possibly other effects such as beam hardening or scatter). The computational means then reconstructs the simulated projections from the previous step into simulated CT images. The computational means then uses the no-noise images as target CT images and the high-noise images as "bad" examples for the critic, and makes the critic learn to discriminate the two sets.

The CBCT simulation requires a CT volume representing the patient that is to be scanned. Additional information regarding the geometry of the scan, such as the patient's alignment in the coordinate system and which gantry angle the scan should start and finish at, may be provided. The accuracy of the final CBCT scan may also be altered through defining the spectrum of the beam, as well as material density thresholds corresponding to detected intensity levels. This density mapping translates which detected intensity corresponds to air, soft tissue and bones, later used to convert the detected intensity into gray scale images. Each material is first divided into three distinct threshold values of measured intensity and is assigned a label 0, 1, 2, respectively. In order to convert the volume into gray scale values and to avoid a "staircase" appearance, the pixel value is assigned through interpolating between the threshold values.

One may also introduce physical artefacts, such as quantum noise, which imitates photon starvation, and beam hardening, which is simulated using the polychromaticity of a forward projector. These settings all contribute to producing simulated raw data similar to as one would obtain from a real CBCT scan, which then is used as input for CBCT reconstruction. This simulated reconstructed volume then shares the alignment with the targets, facilitating the supervised training of the regularizers.

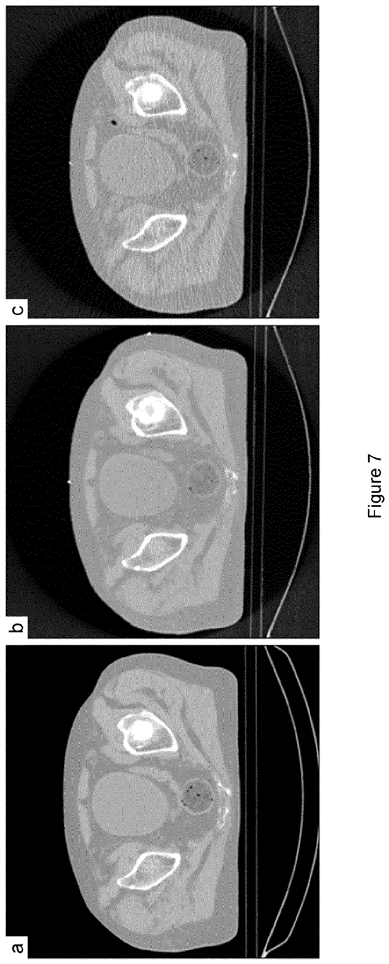

Slices of the target images and the corresponding simulated CBCT images are presented in FIGURE 7, where it is noticeable that the CBCT images contain noise and photon starvation, demonstrated by the thin lines across the image. Panel (a) is a slice of an original CT image in the dataset. Panel (b) is a slice of the transformed CT images used as targets. Panel (c) is a slice of the simulated noisy CBCT scan in the dataset.

The generated transformed CT volumes and the simulated CBCT volumes were used to train the regularizers. The generated data set of volumes is cropped to the size of 340×340×50 voxels. The voxel spacing in the (x, y)-dimension is 1.171875 mm and the spacing in the z-dimension is 3 mm, which follows the spacing dimensions of the original CT scans that were used for the simulations. The cropping of the images is set as described since it captures the most vital information, i.e. the area surrounding the pelvis. Quantum noise was introduced for the simulated low quality images. The photon flux intensity was set to correspond to a noise level span of 0.1 to 1 mAs in reality, which is a common range during scans.

During training, an 85-15% train-test-split of the data set was used, meaning that 39 patients were used to train the regularizer, and seven patients were used for evaluation.

After obtaining the simulated data, performing pre-processing and creating a train-test split was done. The samples, containing target and unregularized images, were sent to a Python program for training the regularizers. The code is based on Algorithm 2 from the work of Mukherjee, S. et al., in which 2D reconstruction of CT images may be applied. The algorithm was adapted to a CBCT setting, including hyperparameter tuning (see below for further details). The open-source machine learning library PyTorch was used for creating and training the regularizer. With the architecture visualized in Figure 3 and discussed above, a convolutional neural network representing the regularizer may be constructed.

Training of learned regularizers may be understood by first considering the notion that a CBCT volume consists of multiple 2D slices stacked on each other. In this way, each volume may be decomposed into several 2D images in the depth dimension, and thereby, 2D convolutional layers are suitable. The training set is then effectively a collection of 2D images instead of 3D volumes. Hence, larger neural networks may be trained as the 2D kernels do not consume as much memory inherently as 3D kernels, which is a prerequisite for high performance in this complex context. The desired outcome is that, although the 3D volumes are collapsed into a set of 2D images, the model is able to generalize to some extent when evaluated on unseen 3D volumes.

The output of the proposed convolutional 2D CNN layers may be formulated mathematically as:

$$out\left(N_i, C_{out_j}\right) = \text{bias}\left(C_{out_j}\right) + \sum_{k=0}^{C_{in}-1} weight\left(C_{out_j}, k\right) * \text{input}(N_i, k) \qquad \text{(Eqn. 9)}$$

where the input is of size (N, $C_{in}$, H, W) and the output has shape (N, $C_{out}$, $H_{out}$, $W_{out}$). Here, TV represents the batch size, $C_{in}$ and $C_{out}$ are the color channels respectively, H and $H_{out}$ symbolize the height, while W and $W_{out}$ correspond to the width. The * operator is used to perform the convolution. Given the input (N, $C_{in}$, H, W), the output elements $H_{out}$ and $W_{out}$ may be of the following shape:

$$H_{out} = \left\lfloor \frac{H + 2 \cdot padding[0] - dilation[0] \cdot (kernel\_size[0] - 1)}{stride[0]} - 1 \right\rfloor \qquad \text{(Eqn. 10)}$$

$$W_{out} = \left\lfloor \frac{W + 2 \cdot padding[1] - dilation[1] \cdot (kernel\_size[1] - 1)}{stride[1]} - 1 \right\rfloor \qquad \text{(Eqn. 11)}$$

where padding, stride, dilation and kernel size are three-dimensional vectors containing the selected parameter setting in each spatial dimension.

The number of layers and filters, the kernel size, the chosen activation functions with their corresponding variables, and the selected pooling technique, as well as the settings for padding, stride, dilation are all tuned empirically to optimize the evaluation metrics discussed below.

With a specified parameter setup for the model, the regularizer may now be trained for a certain number of epochs using the Adam optimizer. The learning rate, choice of $\beta_1$ and $\beta_2$, and penalty strength of $\lambda_{gp}$ enforcing the Lipschitz constraint, are additional parameters to be tweaked for optimal performance. The loss of the training problem may be monitored empirically to ensure convergence of the objective function.

The inventors have implemented stochastic gradient descent (the Adam algorithm) in the present worked examples for training the regularizers, but of course other training techniques are feasible.

When the regularizer is finished training, the output of the model is the learned weights in the kernels and the bias terms associated with each layer in the neural network. This model is then fed to the existing pipeline (implemented in C++ in the present case, but of course other implementation means are feasible), where the actual image reconstruction is performed. The iterative solver computes the gradient of the data fidelity term and the gradient of this learned regularizer in Equation 1 with respect to the current input image $x_k$ at iteration $k$ in the scheme. The latter may be calculated with another Python program using PyTorch, where the trained regularizer from the previous pipeline step is inserted. After convergence, the final reconstructed CBCT image is obtained in .mha format and may be viewed using appropriate visualization tools, such as VV - the 4D slicer, for further evaluation. Of course, other calculation and visualization means are feasible.

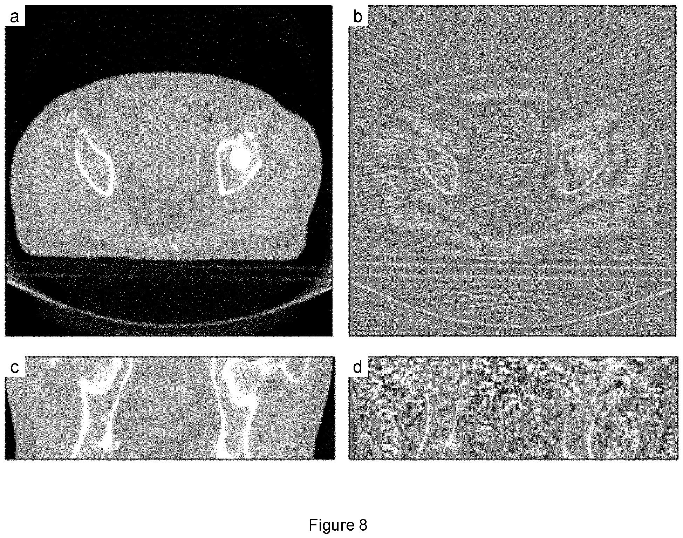

Initially, for comparison purposes, consider the case of a single axis multi-slice 2D model (that is, outside the scope of embodiments). The precise parameter choices of the best reconstruction using the multi-slice 2D model found by the inventors are shown in Table 2 below. The model was trained on 39 patients with 50 slices each, as described above. The corresponding images of the reconstruction and the gradient of the regularizer are depicted in FIGURE 8, where a slice in the middle of the volume is chosen in both the $x$ - $y$ plane and the $x$ - $z$ plane. Panel (a) shows the best reconstruction using the multi-slice 2D model in the $x$ - y plane. Panel (b) shows the gradient of the best regularizer using the multi-slice 2D model in the $x$ - $y$ plane. Panel (c) shows the best reconstruction using the multi-slice 2D model in the $x$ - $z$ plane. Panel (d) shows the gradient of the best regularizer using the multi-slice 2D model in the $x$ - $z$ plane.

The reconstructed images are obtained from the iterative method described above, using $\lambda$ = 15000 and 10 epochs (not to be confused with the number of epochs used for training, described in Table 2).

Table 2. Parameter choices of the best reconstruction using the multi-slice 2D model.

| Learning rate | Epochs | Batch size | Betas | Layers | Filters | Kernel Size | ReLu Slope | $\lambda_{gp}$ |
|---|---|---|---|---|---|---|---|---|
| $10^{-5}$ | 5 | 1 | (0.5, 0.8) | 10 | 250 | a | 0.2 | 5 |

Using the 2D convolutional layers, the trained regularizer is able to attenuate the noisy raw data, while preserving both basic features and outlines of the interior, as well as finer details in the soft tissue. The intricate characteristic is clearly shown in the image of the gradient where there are detailed structures across the slice of the body.

The parameter choice of the best obtained results using the multi-slice 2D model was selected according to empirical analysis. One somewhat intuitive finding was that an increased amount of layers and filters resulted in a more detailed final image. As expected, the issues with memory constraints were more tangible than issues with overfitting. Relating to the training speed of the regularizer, the default settings of the Adams optimizer were found to result in a slow learning. Instead, it was found that a decrease of the parameters ($\beta_1$, $\beta_2$) was beneficial. Additionally, a small learning rate proved to yield slow learning of the regularizer as well. On the other hand, a large learning rate failed to capture some of the details of the optimal solution, leading to the choice of $\alpha = 10^{-5}$ in the Adam optimizer. This selection proved to not be too coarse, while still maintaining training speed. The combination of setting the slope of the leaky ReLu to 0.2 and initializing the weights between 0 and 0.01, resulted in a stable solution from training the regularizer. It was especially found that setting the initial weights of the neural network to be too large gave slow convergence to a small loss.

Furthermore, max pooling between the layers was explored. Compared to the result of average pooling, the approach yielded far worse reconstructed images with much more noise. Dropping the Lipschitz constraint resulted in unstable regularizers, emphasising the importance of the restriction to Lipschitz continuous solutions. The gradient penalty enforcing the Lipschitz constraint was found to be functional using $\lambda_{gp}$ = 5. The impact of larger kernels was also investigated, where a kernel size of 3 was favourable, since greater kernel sizes resulted in more coarse reconstructions and details in the tissue were less prominent. Additionally, the effect of increasing the batch size during training was explored. However, increasing the batch size notably increased the memory usage and training time, without affecting the learned regularizer distinctively.

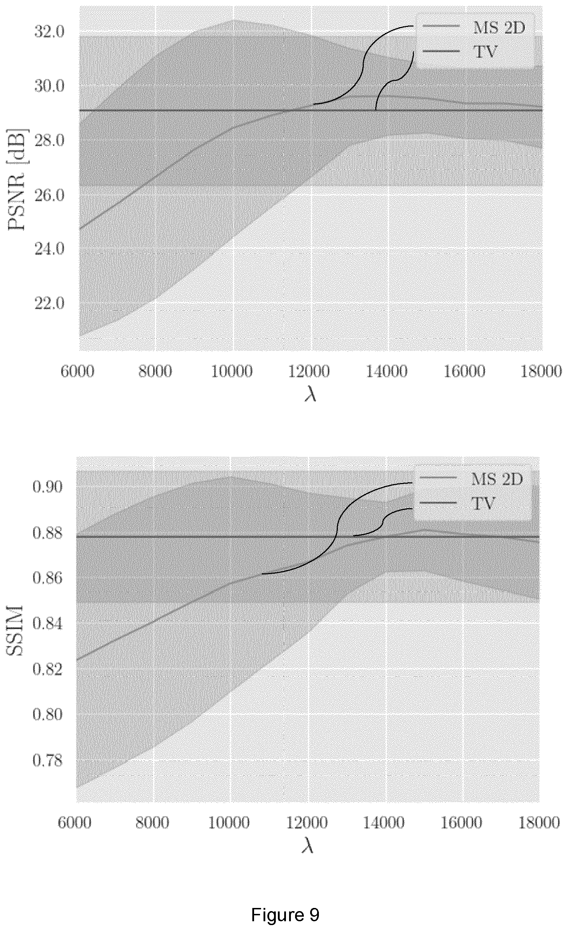

A parameter that did have a large impact on the final reconstructed image was the choice of $\lambda$ for $\mathcal{R}_\theta (x_k) = \lambda R_\theta(x_k)$ in Equation 7. In order to find the correct choice, the PSNR and SSIM were calculated for reconstructions made using the multi-slice 2D model, while varying $\lambda$ between 6000 and 15000. The results are shown in FIGURE 9 (alongside benchmark results for conventional TV regularization). The metrics used here are the Peak Signal-to-Noise Ratio (PSNR) and Structural Similarity Index Measure (SSIM). Typically, one desires a high PSNR value, since this corresponds to smaller differences between the target image and its noisy approximation, and thereby indicates higher quality. However, the PSNR might fail to capture structural information when comparing to the target image, since only the peak signal and the overall noise is considered. A commonly used metric to account for this feature is the SSIM. SSIM computes the similarity between two images, aiming to replicate the human perception of visual quality. Values close to the maximum 1 indicates higher quality of the approximated image.

Through analysis of the images showing the PSNR and SSIM of the reconstructed images using the multi-slice 2D model, it may be concluded that the optimal combination of PSNR and SSIM is obtained for $\lambda = 9500$. $\lambda = 13000$ and $\lambda = 14000$ achieve a slightly higher PSNR value, but the SSIM is clearly maximized for $\lambda = 15000$. As SSIM is constructed to mimic the visual human perception, this metric may be considered to be more important. Thus, $\lambda = 15000$ was chosen for the final multi-slice 2D model where the averages were PSNR=29.5174 and SSIM=0.8809 with standard deviations $\sigma_{PSNR}$=1.26265 and $\sigma_{SSIM}$=0.0179 in the $x$ - $y$ plane, while PSNR=28.7838 and SSIM=0.8971 with $\sigma_{PSNR}$=1.9401 and $\sigma_{SSIM}$=0.0155 in the $x$ - $z$ plane, correspondingly.

Turning now to a 3-plane multi-slice 2D model, according to embodiments, each 2D neural network was trained along three orthogonal planes, $x$ - $y$, $x$ - $z$, $y$ - $z$, where the optimal parameter setup of each neural network was arrived at empirically and described in Table 3 below.

Table 3. Parameter choices of the best reconstructions using the 3-plane multi-slice 2D model, according to embodiments.

| Direction | Learning rate | Epochs | Batch size | Betas | Layers | Filters | Kernel Size | ReLu Slope | $\lambda_{gp}$ |
|---|---|---|---|---|---|---|---|---|---|
| $x$-$z$ | $10^{-5}$ | 6 | 3 | (0.7, 0.9) | 8 | 100 | 3 | 0.2 | 5 |
| $x$-$y$ | $10^{-5}$ | 5 | 1 | (0.5, 0.8) | 10 | 250 | 3 | 0.2 | 5 |
| $y$-$z$ | $10^{-5}$ | 6 | 3 | (0.7, 0.9) | 8 | 100 | 3 | 0.2 | 5 |

The most effective trained model in the $x$ - $y$ direction is identical to the neural network that is stacked to create the regularizer in the multi-slice 2D model, described above. The training of the neural network in the $x$ - $y$ plane is hence the same as previously described and key insights regarding parameter choices as discussed above may be extended for the 3-plane multi-slice model as well.

The 3-plane approach includes the neural networks trained in the $x$ - $z$ and $y$ - $z$ directions with the aim of capturing further volumetric properties. The design of the $x$ - $z$ and $y$ - $z$ are similar in size and shape but less complex than the neural network in the $x$ - $y$ plane. This setup choice was made to avoid overfitting considering that the volume in the $x$ - $y$ plane is of size $340 \times 340$, while the size is $340 \times 50$ for the $x$ - $z$ and $y$ - $z$ respectively. Given that the complexity is reduced with smaller image sizes, the neural networks in these planes were designed correspondingly. The smaller networks had fewer layers and fewer filters, which allowed for a larger batch size during training without affecting the computational time heavily. These networks would also use higher values of the $(\beta_1, \beta_2)$ parameters of the Adams optimizer, since the decreased complexity allowed fast training.

During the reconstruction step of the images (inference), all three neural networks were fused together by taking a weighted average across all three orthogonal planes. That is, the output of the regularizer $\mathcal{R}$, as in equation 2, is the weighted sum of the $\mathcal{R}_{yz}$, $\mathcal{R}_{xz}$, and $\mathcal{R}_{xy}$:

$$\mathcal{R} = w_{yx}\mathcal{R}_{yx} + w_{xz}\mathcal{R}_{xz} + w_{xy}\mathcal{R}_{xy} \qquad \text{(Eqn. 12)}$$

This is also hinted at in Table 1 above, where the calculation of the gradient of $\mathcal{R}$ is set out.

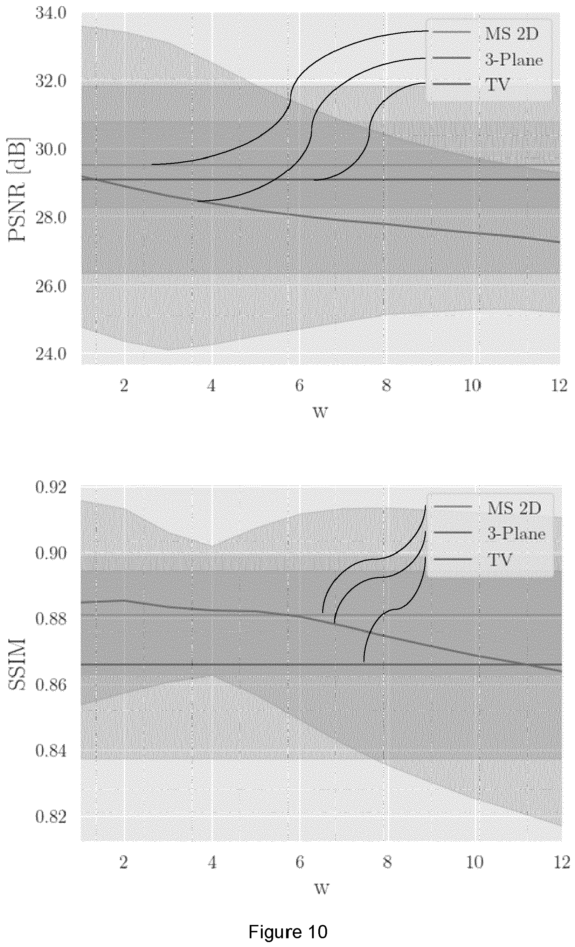

Since the most complex neural network is the one in the $x$ - $y$ plane, this network was given a higher influence on the final gradient of the regularizer. As both neural networks in the $x$ - $z$ and $y$ - $z$ planes are of the same magnitude, these neural networks were assigned the same weight as no further motivation may be made a priori for one plane being more important than the other. In real applications, one advantage of the 3-plane multi-slice model is the adaptability to weight a certain plane higher depending on which view best captures the field of interest. In this worked example, the *x - y* has been the default view of study, although depending on the application, the model may be adjusted accordingly. This is hence may be an important parameter choice, unique for the 3-plane multi-slice model. Fixating $\lambda$ = 6000, different weights between the *x - z, y - z* and x - y planes were explored, and the PSNR and SSIM averages in the *x - y* plane could be calculated for each setup. The results are shown in FIGURE 10 for *x - z, y - z: x - y*, weights ranging from 1:1 to 1:12.

There is a peak for the weights 1:2 in the SSIM plot, while the PSNR is maximized for equal weights. The peak SSIM value is clearly higher than the corresponding best TV and multi-slice 2D results in the *x - y* plane, not taking into consideration any results in other directions. As one may argue that the SSIM metric is a more comprehensive quality measure, since SSIM captures structural similarity in images, the final weight was set to 1:2 for *x - z, y - z: x - y,* as this yielded the next best PSNR score.

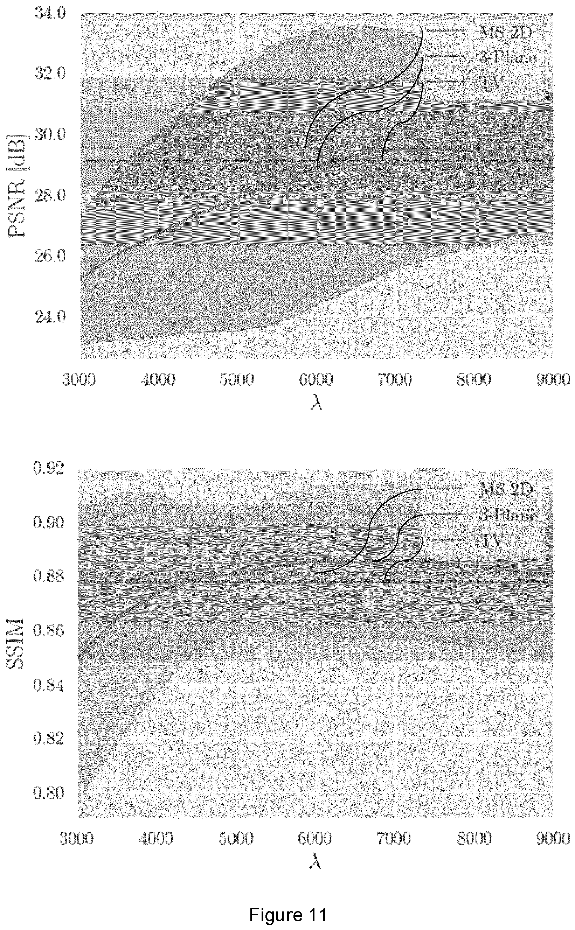

Similar to the multi-slice model, the choice of $\lambda$ in the regularizer is of high importance and FIGURE 11 shows the PSNR and SSIM in the *x - y* plane for the 3-plane multi-slice model with *x - z, y - z: x - y* weights 1 : 2 for different $\lambda$, ranging from 3000 to 9000.

Selecting $\lambda$ = 7000 seems to both maximize PSNR and SSIM simultaneously, with PSNR=29.4825 and SSIM=0.88554. Hence, the optimal parameter choice was set to $\lambda$ = 7000. However, it was observed that the optimal weight and $\lambda$ setup varied considerably for some test patients. This indicates that there was potential to achieve even better outcomes for individual test cases. Clearly, it may not be reasonable to tune these parameters for each patient before reconstruction, but having a larger data set might make the model more robust as it becomes less sensitive to variations in the data. Then, using a general $\lambda$ and weight configuration could be more justifiable. In addition, understanding the underlying factors that contribute to the substantial difference in some patients may help when optimizing further. Exploring the PSNR and SSIM variations in other planes is also relevant depending on which view is of highest importance to capture the field of interest.

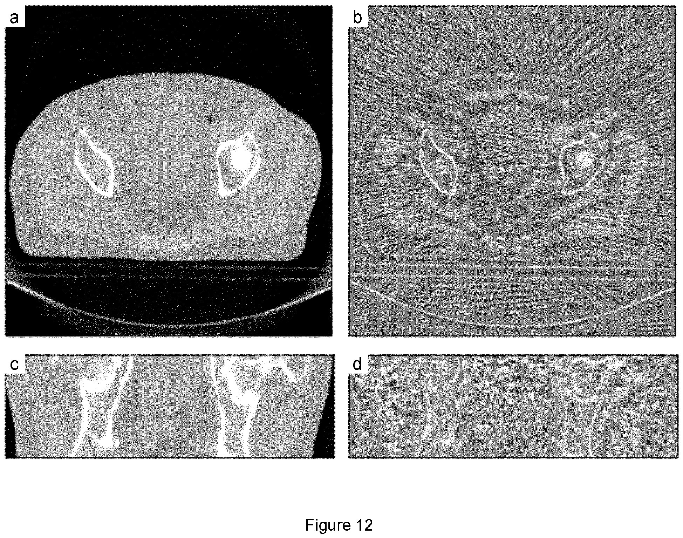

The reconstructed image and the corresponding gradient with weights 1 : 2 and $\lambda$ = 7000 are shown in FIGURE 12. Panel (a) shows the best reconstruction using the 3-plane multi-slice model with 1:2 weights for *x - z, y - z : x - y.* Panel (b) shows the gradient of the best regularizer using the 3-plane multi-slice model. Panel (c) shows the best reconstruction using the 3-plane multi-slice model with 1:2 weights for *x - z, y - z: x - y.* Panel (d) shows the gradient of the best regularizer using the 3-plane multi-slice model.

Comparing the results of the best model in Figure 12 and the results of Figure 8, both the reconstructed images and the gradient of the regularizer are highly similar and it is hard for a non-expert to distinguish any clear improvements. It is reasonable to assume that some fine structures are lost due to noise during low-dose CBCT scans. Hence, the results of the 3-plane multi-slice model are of relatively high quality, while outperforming benchmark conventional TV results.

The last image quality metric considered is the Modulation Transfer Function (MTF). MTF provides a measure, in the range [0, 1], of an imaging system's ability to transmit different spatial frequencies. A single number estimate of the resolution in the spatial-frequency domain is usually reported as the inverse of frequency limits, in this case cycles/pixels, for which the MTF falls below certain threshold values, here 0.5 and 0.1. A high estimate indicates ability to transmit high frequencies, which is important in order to capture fine details and in turn generate a high resolution image. The MTF may be determined as a function of the so-called Edge Spread Function (ESF) and the Line Spread Function (LSF).

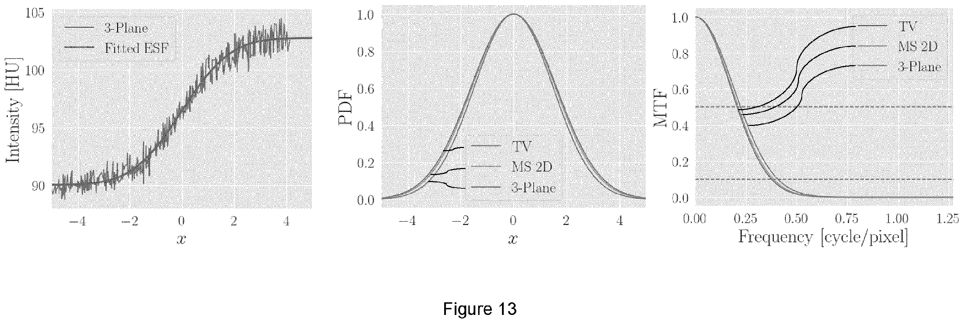

FIGURE 13 displays the fitted ESF, LSF and the MTF for the 3-plane multi-slice 2D model applied on one of the test patients, including the corresponding metrics for a benchmark TV regularizer and the best multi-slice 2D model.

As may be observed, it is clear that the 3-plane multi-slice 2D model achieves a particularly high image resolution, with $MTF_{0.1}$ = 0.40840 and $MTF_{0.5}$ = 0.21914. The LSF is very tight in comparison to the other models, which indicates low blurring. This conclusion supports that the 3-plane multi-slice 2D model is superior to both the TV benchmark and the multi-slice 2D model in terms of image quality metrics, such as PSNR, SSIM and MTF.

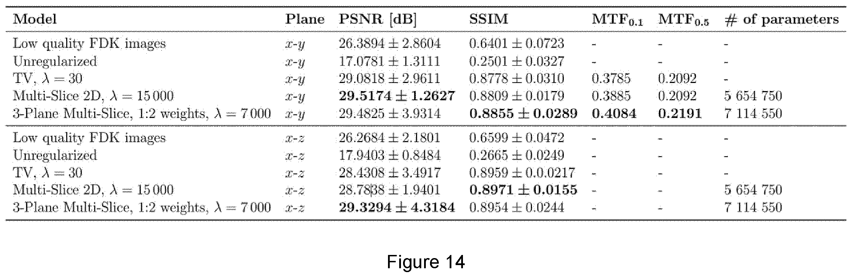

The following provides a comparison between benchmark reconstruction techniques, including reconstruction using TV regularization and reconstruction using the well-known FDK algorithm. FIGURE 14 is a table summarising key metrics for the different models, where the highest score in each plane is highlighted. The table summarizes a selection of important average metrics with included standard deviations for the best model in each category for the *x - y* plane and the *x - z* plane. The MTF values are computed in the *x - y* plane for TV regularization with $\lambda$ = 45, the comparison multi-slice 2D regularization and 3-plane multi-slice regularization according to embodiments, which all produced images suitable for edge detection.

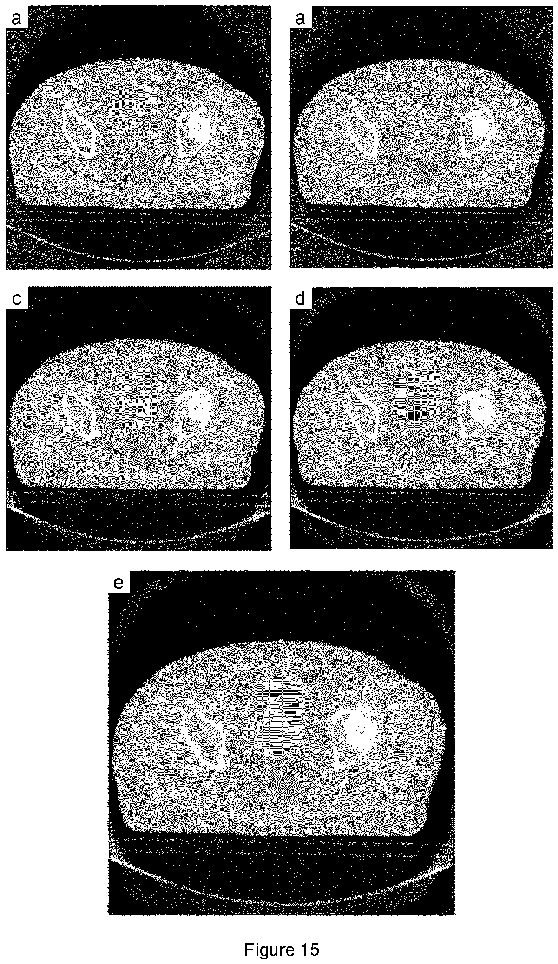

FIGURE 15 visualizes the reconstruction for two considered planes for the best model in each category. Panel (a) is the simulated target CBCT image. Panel (b) is the unregularized image, reconstructed using FDK. Panel (c) is reconstructed using TV regularization, with $\lambda$ = 45. Panel (d) is reconstructed using the comparative multi-slice 2D model. Panel (e) is reconstructed using a 3-plane multi-slice 2D model, according to embodiments. In each panel, the upper frame corresponds to the *x - y* plane, the lower frame corresponds to the *x - z* plane.

Studying the performance metrics and the reconstructions for all models, it is evident that both 3-plane multi-slice 2D and multi-slice 2D maximize PSNR and SSIM simultaneously, completely the benchmark techniques. In addition, the spatial frequencies at the given MTF levels are considerably higher for both approaches, implying better resolution in comparison with the TV regularizer. The multi-slice 2D has slightly higher PSNR, but the 3-plane multi-slice 2D model has the largest SSIM in the *x - y* plane. Also, it may be argued that SSIM is a more appropriate image quality metric. The 3-plane multi-slice model achieves by far the best PSNR in the *x - z* plane, while the SSIM is slightly higher for the 2D multi-slice model. The lower SSIM value of the 3-plane multi-slice 2D model in comparison to the multi-slice 2D version, may be explained by one outlier patient in the test set that performs poorly while the rest of the six test patients shows better SSIM results using the 3-plane model. This highlights the advantages of a larger data set to combat high influence of extreme data points. However, in comparison with the currently used TV regularizer, with $\lambda$ = 45, the PSNR, SSIM, as well as the $MTF_{0.1}$ and $MTF_{0.5}$ values are substantially increased with the different multi-slice approaches. Investigating the reconstructed images, one may note that the TV regularizer does not reduce the noise level as much as the two multi-slice 2D approaches. This clearly highlights the potential of deep learning-based regularizers as an alternative to the currently used ones in CBCT reconstruction.

Comparing the two multi-slice 2D reconstructions with the unregularized version and the corresponding target image, the models are remarkably good at removing the noise, while preserving the inner structure to a great extent. However, the different multi-slice 2D approaches tend to introduce a blurring effect, reducing the contrast between tissue of different densities. A possible explanation to this undesired behaviour lies in the model itself inherently, where removing noise occurs at the expense of smudging. Nonetheless, both the multi-slice 2D and 3-plane multi-slice 2D model have demonstrated the most optimal performance within this context thus far.

The similarity in performance between the single-plane multi-slice 2D model and the 3-plane equivalent is anticipated, given that the former is a subset of the latter. While the 3-plane multi-slice 2D model has around 1.5 million more parameters than the best single multi-slice 2D framework, making it perhaps less attractive, the increase is justified for large volumes. This may be argued for since the 3-plane multi-slice 2D approach is hints at superiority in the x - z plane with significantly better PSNR and very similar levels of SSIM scores on average. The high performance is evidently associated with the model architecture, which is designed to capture the 3D geometry better with its three-plane structure, where the x - z plane is here included in the training data. Good performance in the *x - z* plane is highly relevant in CBCT reconstruction, since this view provides additional volumetric information about the inner state of the body. Being able to reconstruct multiple slices, representing a larger volume, of satisfying quality in the *x - z* plane may therefore be very important. This clearly displays the ability to capture volumetric properties in the 3-plane multi-slice approach in comparison to the stacked version that only considers one plane during training and reconstruction.

The above worked examples use simulated data. The inventors have verified that the techniques disclosed herein are also applicable to real (i.e., non-simulated) data. That is, the following outlines the efficacy of CBCT reconstruction, according to embodiments, of actual raw data. The raw data is imaging data of a male pelvic area. This feature is explored for one of the seven test patients. The ability of the technique to generalize will be assessed leveraging the original CT data that was previously used to simulate the CBCT scans, and real CBCT data from the corresponding patients.

Table 4 summarizes the performance for both the comparative multi-slice 2D approach and the 3-plane multi-slice 2D model approach, according to embodiments, with respect to PSNR and SSIM in the considered directions. Benchmarks techniques, i.e. the FDK and TV regularization with $\lambda$ = 1, are also included for comparison purposes.

Table 4. Summary of key metrics for the different models in two planes (or sets thereof).

| Model | Plane | PSNR [dB] | SSIM |
| --- | --- | --- | --- |
| FDK | *x-y* | 11.0973 | 0.5135 |
| TV, $\lambda$ = 1 | *x-y* | 14.6871 | 0.5450 |
| Multi-Slice 2D, $\lambda$ = 1000 | *x-y* | 17.4057 | 0.5886 |
| 3-Plane Multi-Slice, 1:2 weights, $\lambda$ = 900 | *x-y* | **17.4938** | **0.5952** |
| FDK | *x-z* | 16.8008 | 0.5961 |
| TV, $\lambda$ = 1 | *x-z* | **19.8437** | 0.5781 |
| Multi-Slice 2D, $\lambda$ = 1 000 | *x-z* | 18.8660 | 0.6423 |
| 3-Plane Multi-Slice, 1:2 weights, $\lambda$ = 900 | *x-z* | 18.1418 | **0.6707** |

Evaluating the performance quantitatively shows again the superiority of the novel 3-plane multi-slice 2D model. Both image quality metrics are increased significantly for the deep learning-based regularizers compared with the baseline models, by only reducing the strength of the regularizing parameter $\lambda$. The 3-plane multi-slice 2D model achieves the greatest SSIM value and has high PSNR scores in both planes. Hence, it may be concluded that these deep learning-based regularizers, trained on simulated CBCT data, seem to be able to successfully regularize actual scans of the male pelvic area in this context.

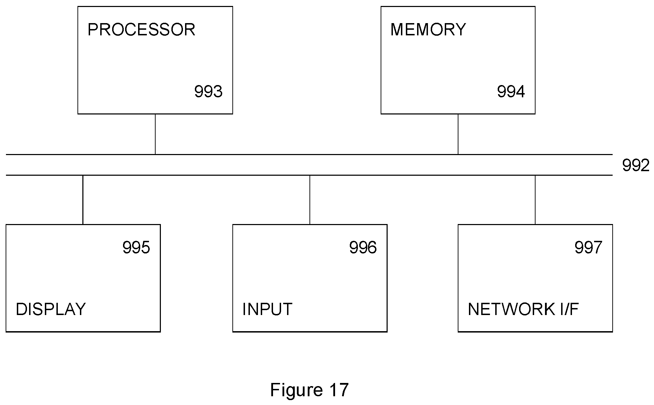

FIGURE 17 is a block diagram of a computing device, such as a data storage server in communication with an imaging apparatus, which embodies the present invention, and which may be used to implement a method of an embodiment of tomographic reconstruction and/or generating of training datasets. The computing device comprises a processor 993, and memory, 994.

Optionally, the computing device also includes a network interface 997 for communication with other computing devices, for example with other computing devices of invention embodiments. For example, an embodiment may be composed of a network of such computing devices, where iterative image reconstruction may be performed on a cloud-based platform.

Optionally, the computing device also includes one or more input mechanisms such as keyboard and mouse 996, and a display unit such as one or more monitors 995. The components are connectable to one another via a bus 992.

The memory 994 may include a computer readable medium, a term which may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of tomographic reconstruction and machine learning described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other computing devices, such as imaging apparatuses, via the network. The network I/F 997 may control data input/output from/to other apparatus via the network.

The computing device may comprise processing instructions stored on a portion of the memory 994, the processor 993 to execute the processing instructions, and a portion of the memory 994 to store reconstructed images (or intermediate datasets thereof) during the execution of the processing instructions. The reconstructed image may be stored on the memory 994 and/or on a connected storage unit, and may be transmitted, transferred or otherwise communicated to a display or an external device.

Methods embodying the present invention may be carried out on a computing device such as that illustrated in Figure 17. Such a computing device need not have every component illustrated in Figure 17, and may be composed of a subset of those components. A method embodying the present invention may be carried out by a single computing device in communication with one or more data storage servers via a network. The computing device may be a data storage itself storing reconstructed images, training datasets, or intermediate data.

A method embodying the present invention may be carried out by a plurality of computing devices operating in cooperation with one another. One or more of the plurality of computing devices may be a data storage server storing at least a portion of reconstructed image and/or training datasets.

Unless specifically stated otherwise, as apparent from the following discussion, it is to be appreciated that throughout the description, discussions utilizing terms such as " receiving", "determining", "comparing ", "enabling", "maintaining," "identifying,", "obtaining", "accessing" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

While certain embodiments have been described, these embodiments have been presented by way of example only, and are not intended to limit the scope of the inventions. Indeed, the novel methods and apparatuses described herein may be embodied in a variety of other forms.

**Claims**

1. A computer-implemented method of tomographic reconstruction, the method comprising:

   receiving an input dataset comprising tomographic projection data of an object; and
   reconstructing an image of the object using an iterative reconstruction technique, wherein the iterative reconstruction technique seeks to minimize a cost function, the cost function including a first regularizer and a second regularizer,
   wherein the first regularizer is a first trained machine learning model, trained using image data associated with the object and extracted from a first direction and the second regularizer is a second trained machine learning model, trained using image data associated with the object and extracted from a second direction.

2. The method of claim 1, wherein:

   the cost function includes a third trained machine learning model as a third regularizer, trained using image data associated with the object and extracted a third direction, and
   the first direction, second direction, and third direction are mutually orthogonal.

3. The method of claim 1 or claim 2, wherein the tomographic reconstruction is medical tomographic reconstruction, and the object is a patient.

4. The method of any preceding claim, wherein the tomographic projection data is cone-beam computed tomography, CBCT, data.

5. The method of any preceding claim, wherein the iterative reconstruction technique uses a gradient descent algorithm.

6. The method of any preceding claim, wherein any or all of the regularizers are trained using a stochastic gradient descent algorithm.

7. The method of any preceding claim, wherein any or all of the regularizers are trained in a weakly supervised manner.

8. The method of any preceding claim, wherein any or all of the regularizers are adversarial convex regularizers.

9. The method any preceding claim, wherein image data associated with the object and extracted from the first direction includes a first training subset comprising higher quality data providing ground truth data and a second training subset comprising lower quality data providing training input data.

10. The method of claim 9, wherein the first training subset comprises CT scan data and the second training subset comprises CBCT scan data.

11. The method of claim 9 or claim 10, wherein the second training subset is simulated data, generated from the first training subset.

12. A computer-implemented method of generating a training dataset for a machine learning model, in particular the first regularizer and/or the second regularizer of any of claims 1 to 11, the method comprising:

    receiving computed tomography, CT, images of patients as ground truth images;
    generating training images by adding quantum noise to the CT images; and
    splitting the ground truth images and the training images into a training set and a testing set.

13. A data processing apparatus comprising a memory storing computer-executable instructions, and a processor configured to execute the instructions to carry out the method of any of claims 1 to 12.

14. A computer program comprising instructions which, when the program is executed by a computer, cause the computer to carry out the method of any of claims 1 to 12.

15. A computer-readable medium comprising instructions which, when executed by a computer, cause the computer to carry out the method of any of claims 1 to 12.

Receive an input dataset comprising tomographic projection data of an object. ⌐ 102

Reconstruct an image of the object using an iterative reconstruction technique, wherein the iterative reconstruction technique seeks to minimize a cost function, the cost function including a first regularizer and a second regularizer, wherein the first regularizer is a first trained machine learning model, trained using image data associated with the object and extracted from a first direction, and the second regularizer is a second trained machine learning model, trained using image data associated with the object and extracted from a second direction. ⌐ 104

Figure 1

Figure 2

Figure 3

Receive computed tomography, CT, images of patients as ground truth images. ⟋ 402

Generate training images by adding quantum noise to the CT images. ⟋ 404

Split the ground truth images and the training images into a training set and a testing set. ⟋ 406

Figure 4

Figure 5

Figure 6

Figure 7

Figure 8

Figure 9

Figure 10

Figure 11

Figure 12

Figure 13

| Model | Plane | PSNR [dB] | SSIM | $\text{MTF}_{0.1}$ | $\text{MTF}_{0.5}$ | # of parameters |
|---|---|---|---|---|---|---|
| Low quality FDK images | $x$-$y$ | $26.3894 \pm 2.8604$ | $0.6401 \pm 0.0723$ | - | - | - |
| Unregularized | $x$-$y$ | $17.0781 \pm 1.3111$ | $0.2501 \pm 0.0327$ | - | - | - |
| TV, $\lambda = 30$ | $x$-$y$ | $29.0818 \pm 2.9611$ | $0.8778 \pm 0.0310$ | 0.3785 | 0.2092 | - |
| Multi-Slice 2D, $\lambda = 15\,000$ | $x$-$y$ | $\mathbf{29.5174 \pm 1.2627}$ | $0.8809 \pm 0.0179$ | 0.3885 | 0.2092 | 5 654 750 |
| 3-Plane Multi-Slice, 1:2 weights, $\lambda = 7\,000$ | $x$-$y$ | $29.4825 \pm 3.9314$ | $\mathbf{0.8855 \pm 0.0289}$ | $\mathbf{0.4084}$ | $\mathbf{0.2191}$ | 7 114 550 |
| Low quality FDK images | $x$-$z$ | $26.2684 \pm 2.1801$ | $0.6599 \pm 0.0472$ | - | - | - |
| Unregularized | $x$-$z$ | $17.9403 \pm 0.8484$ | $0.2665 \pm 0.0249$ | - | - | - |
| TV, $\lambda = 30$ | $x$-$z$ | $28.4308 \pm 3.4917$ | $0.8959 \pm 0.0.0217$ | - | - | - |
| Multi-Slice 2D, $\lambda = 15\,000$ | $x$-$z$ | $28.7838 \pm 1.9401$ | $\mathbf{0.8971 \pm 0.0155}$ | - | - | 5 654 750 |
| 3-Plane Multi-Slice, 1:2 weights, $\lambda = 7\,000$ | $x$-$z$ | $\mathbf{29.3294 \pm 4.3184}$ | $0.8954 \pm 0.0244$ | - | - | 7 114 550 |

Figure 14

Figure 15

Figure 16

Figure 17

**EUROPEAN SEARCH REPORT**

Europäisches Patentamt
European Patent Office
Office européen des brevets

Application Number

EP 24 17 6877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM BYEONGJOON ET AL: "A Methodology to Train a Convolutional Neural Network-Based Low-Dose CT Denoiser With an Accurate Image Domain Noise Insertion Technique", IEEE ACCESS, vol. 10, 16 August 2022 (2022-08-16), pages 86395-86407, XP093109023, USA ISSN: 2169-3536, DOI: 10.1109/ACCESS.2022.3198948 | 12-15 | INV. G06T11/00 |
| A | * the whole document * | 1-11 | |
| A | US 2020/279411 A1 (ATRIA CRISTIAN [US] ET AL) 3 September 2020 (2020-09-03) * paragraph [0040] - paragraph [0046] * * figure 1 * | 1-15 | |
| A,D | MUKHERJEE SUBHADIP ET AL: "Learned convex regularizers for inverse problems", ARXIV (CORNELL UNIVERSITY), March 2021 (2021-03), XP093109015, Ithaca DOI: 10.48550/arxiv.2008.02839v2 * the whole document * | 1-15 | TECHNICAL FIELDS SEARCHED (IPC) G06T |
| A | SATYA P SINGH ET AL: "3D Deep Learning on Medical Images: A Review", ARXIV.ORG, CORNELL UNIVERSITY LIBRARY, 201 OLIN LIBRARY CORNELL UNIVERSITY ITHACA, NY 14853, April 2020 (2020-04), XP081633807, * sec. 2.1, 2.2 * | 1-15 | |

-/--

The present search report has been drawn up for all claims

| Place of search | Date of completion of the search | Examiner |
|---|---|---|
| Munich | 9 October 2024 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

**EUROPEAN SEARCH REPORT**

Application Number

EP 24 17 6877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARGARET DUFF ET AL: "Regularising Inverse Problems with Generative Machine Learning Models", ARXIV.ORG, CORNELL UNIVERSITY LIBRARY, 201 OLIN LIBRARY CORNELL UNIVERSITY ITHACA, NY 14853, 22 July 2021 (2021-07-22), XP091015867, * the whole document * | 1-15 | |
| A | SEBASTIAN LUNZ ET AL: "Adversarial Regularizers in Inverse Problems", ARXIV.ORG, CORNELL UNIVERSITY LIBRARY, 201 OLIN LIBRARY CORNELL UNIVERSITY ITHACA, NY 14853, 29 May 2018 (2018-05-29), XP080883724, * the whole document * | 1-15 | |

TECHNICAL FIELDS SEARCHED (IPC)

The present search report has been drawn up for all claims

| Place of search | Date of completion of the search | Examiner |
|---|---|---|
| Munich | 9 October 2024 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6877

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2024

| Patent document cited in search report | | Publication date | Patent family member(s) | | Publication date |
|---|---|---|---|---|---|
| US 2020279411 | A1 | 03-09-2020 | CN | 111373448 A | 03-07-2020 |
| | | | EP | 3685350 A1 | 29-07-2020 |
| | | | JP | 2020537555 A | 24-12-2020 |
| | | | US | 2020279411 A1 | 03-09-2020 |
| | | | WO | 2019060843 A1 | 28-03-2019 |

EPO FORM P0459

For more details about this annex : see Official Journal of the European Patent Office, No. 12/82

**EP 4 468 243 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MUKHERJEE, S et al.** Learned convex regularizers for inverse problems. *arXiv:2008.02839v2*
- **MUKHERJEE, S. et al.** Learned convex regularizers for inverse problems. *arXiv:2008.02839v2*
- **MUKHERJEE, S. et al.** *arXiv:2008.02839v2*
- **KIM, D. et al.** Combining ordered subsets and momentum for accelerated X-ray CT image reconstruction. *IEEE Trans Med Imaging,* August 2014, vol. 34 (1), 167-178